# EUROPEAN PATENT APPLICATION

(11) **EP 1 821 536 A1**
(43) Date of publication of application: **22.08.2007**
(21) Application number: 07290156.4
(22) Date of filing: 07.02.2007
(51) Int. Cl.: H04N 5/76, G11B 27/00

(54) **Method for time shift and television receiver**

(30) Priority: 10.02.2006 KR 20060012860
(71) Applicant: LG Electronics Inc., Youngdungpo-Gu Seoul (KR)
(72) Inventor: Kim, Yong Chul, Seo-ku Gwangjoo-si (KR)
(74) Representative: Cabinet Plasseraud

(57) **Abstract**

Provided are a method for time shift and a television receiver capable of preventing storage of a broadcasting stream by clearing a buffer when a broadcasting stream is not buffered for longer than a predetermined time during a time shifting operation. In the time shift method, a received broadcasting stream is buffered to a buffer, a time for which a broadcasting stream having the same identification information is received is counted, and the buffer is cleared when the counted time is less than a predetermined time. The television receiver includes a buffer, a storage unit, a signal detector, a timer, and a control unit. The buffer buffers a received broadcasting stream, the storage unit stores the broadcasting stream, and the signal detector extracts package identification information of the broadcasting stream. The timer counts a time for which the same package identification information is received, and the control unit clears the buffer when the counted time is less than a predetermined time.

## Description

### BACKGROUND OF THE INVENTION

### Field of the Invention

The present invention relates to a method of storing a broadcasting signal, and more particularly, to a time shift method for storing a broadcasting signal in real-time, and a television receiver employing the method.

### Description of the Related Art

The rapid development of the television broadcasting technology contributes to performance improvement of a processor and an increase in memory resources of a television receiver, as well as improvement of television broadcasting quality.

For example, a television receiver provided with a personal video recorder (PVR) includes a hard disk driver as a storage medium to allow storage and playback of both broadcasting programs and external input signals received in the hard disk, so as to meet various user demands.

In recent years, a time shifting function has been developed and commercialized, which can offer various modes including pause, reverse playback, and double-speed playback with respect to the real-time broadcasting by allowing real-time storage and playback of broadcasting signals being received in real-time in the hard disk of the PVR.

As for the conventional time shifting function, when a user requests execution of the time shifting function, the television receiver stores a broadcasting signal received in real-time in a time shift storage region of a storage medium, and performs time shift guide OSD (on screen display) for displaying the amount of the broadcasting signal stored in the time shift storage region and simultaneously, allowing selection and playback of a part of the stored broadcasting signal. A user may command playback of a broadcasting signal stored in the time shift storage region through the time shift guide OSD.

The conventional time shifting function is problematic in that a broadcasting signal being received in real-time is continuously stored upon user's request, causing storage of an undesired broadcasting stream received for a very short period of time due to various factors including channel changes.

Hence, a technology is required, which is able to prevent broadcasting streams received for a very short period of time due to reasons including channel changes from being stored during time shifting, so that various demands of a user can be met, and the time shift storage region can be efficiently managed.

### SUMMARY OF THE INVENTION

Accordingly, the present invention is directed to a method for time shift and a television receiver that substantially obviate one or more problems due to limitations and disadvantages of the related art.

An object of the present invention is to provide a method for time shift, and a television receiver, capable of preventing storage of a broadcasting stream by clearing a buffer when the broadcasting stream is not buffered for longer than a predetermined time during time-shifting.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a method for time shift including: buffering a received broadcasting stream to a buffer; counting a time for which a broadcasting stream having the same identification information is received; and clearing the buffer when the counted time is less than a predetermined time.

The method may further include storing the buffered broadcasting stream in a time shift storage region when the counted time is greater than the predetermined time.

The method may further include: checking whether an image stream is present in the broadcasting stream; and clearing the buffer when no image stream is present.

The counting of the time may include: extracting package identification information from the received broadcasting stream; and checking whether the extracted packet identification information is changed.

In another aspect of the present invention, there is provided a method for time shift including: buffering a received broadcasting stream to a buffer; checking whether an image stream is present in the received broadcasting stream; and clearing the buffer when no image stream is present.

The method may further include storing the buffered broadcasting stream in a time shift storage region when the image stream is present in the received broadcasting stream.

The method may further include: counting a time for which a broadcasting signal having the same identification information is received; and clearing the buffer when the counted time is less than a predetermined time.

The method may further include storing the buffered broadcasting stream in a time shift storage region when the counted time is greater than the predetermined time.

In further another aspect of the present invention, there is provided a television receiver including: a buffer receiving a broadcasting stream and buffering the received broadcasting stream; a storage unit storing the buffered broadcasting stream; a signal detector extracting package identification information of the broadcasting stream; a timer receiving the extracted identification information and counting a time for which the same package identification information is received; and a control unit clearing the buffer when the counted time of the timer is less than a predetermined time.

The control unit may store the buffered broadcasting stream in the storage unit when the counted time is greater than the predetermined time.

The control unit may check whether an image stream is present in the received broadcasting stream, and clears the buffer when no image stream is present.

The control unit may control the buffer to buffer the broadcasting stream to the time shift region when the counted time is greater than the predetermined time.

The control unit may check whether an image stream is present in the broadcasting stream, and clear the buffer when no image stream is present.

It is to be understood that both the foregoing general description and the following detailed description of the present invention are exemplary and explanatory and are intended to provide further explanation of the invention as claimed.

### BRIEF DESCRIPTION OF THE DRAWINGS

Fig. 1 is a block diagram of a television receiver including a PVR according to an embodiment of the present invention; and

Fig. 2 is a flowchart of a time shift method according to a preferred embodiment of the present invention.

### DETAILED DESCRIPTION OF THE INVENTION

Reference will now be made in detail to the preferred embodiments of the present invention, examples of which are illustrated in the accompanying drawings. The invention may, however, be embodied in many different forms and should not be construed as being limited to the embodiments set forth herein.

The present invention is applicable to every storage unit that stores and plays back audio and image signals provided from various mediums, such as digital broadcasting signals, analog broadcasting signals, and external input signals. In the following description, only the case where the present invention is applied to a television receiver including a PVR (personal video recorder) will be described in detail.

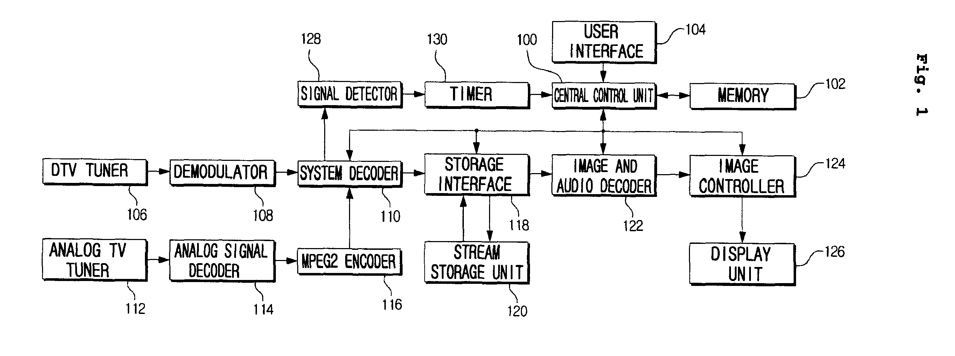

A configuration of the television receiver including the PVR to which the present invention is applicable will now be described with reference to Fig. 1.

A central control unit 100 of the television receiver performs overall control on the television receiver. In a preferred embodiment of the present invention, when a broadcasting stream is not buffered for longer than a predetermined time during a time shifting operation, the central control unit 100 clears a buffer within a stream storage unit 120 so as to prevent storage of the corresponding broadcasting stream.

A memory 102 stores various information including a processing program of the central control unit 100, and particularly, stores information on the predetermined time according to a preferred embodiment of the present invention.

A user interface 104 is in charge of an interface between a user and the central control unit 100, and provides the central control unit 100 various commands or information such as a time shift setting request of the user.

A DTV (digital TV) tuner receives a broadcasting signal through a digital television broadcasting channel, and provides the received broadcasting signal to a demodulator 108. The demodulator 108 demodulates the broadcasting signal into a transport stream, and provides a system decoder 110 with the transport stream.

An analog TV tuner 112 receives a broadcasting signal through an analog television broadcasting channel, and provides the analog signal decoder 114 with the received broadcasting signal. The analog signal decoder 114 decodes the broadcasting signal, and provides the decoded broadcasting signal to an MPEG (moving picture experts group) encoder 116. The MPEG encoder 116 MPEG-encodes the decoded broadcasting signal, and provides the system decoder 110 with the MPEG-encoded signal.

The system decoder 110 decodes the transport stream, which is output from the demodulator 108, into an image stream, an audio stream, and a data stream, and provides the decoded streams to a storage interface 118, an image and audio decoder 122, a central control unit 100, and a signal detector 128. The signal detector 128 receives an image stream from the system decoder 110, extracts PID (package identification information) from the image stream, and provides the PID to a timer 130. The timer 130 is initialized when the PID is changed, and counts a time for which the same PID is received in order to provide information on the counted time to the central control unit 100.

The storage interface 118 stores/reads a broadcasting stream, such as image and audio streams provided from the system decoder 110, in/from the steam storage unit 120 under control of the central control unit 100.

The stream storage unit 120 includes a time shift storage region, and a buffer that temporarily stores a broadcasting stream for storage in the time shift storage region. The buffer has a capacity large enough to buffer a broadcasting program at least for the predetermined time.

The image and audio decoder 122 decodes image and audio streams being received in real-time, or image and audio streams read from the stream storage unit 120 into image and audio data, and provides the decoded data to an image control unit 124. The image control unit 124 outputs the image and audio data through a display unit 126.

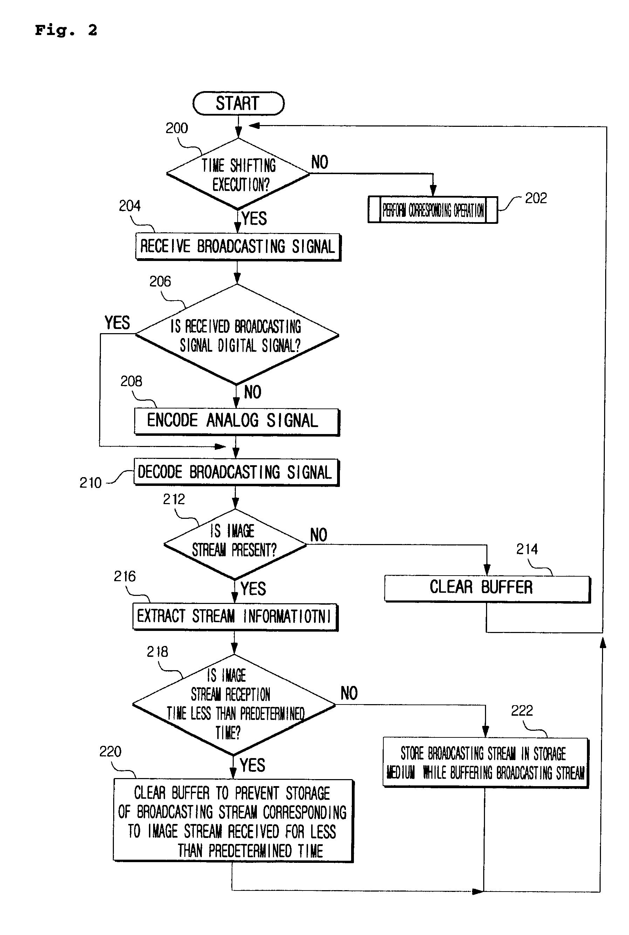

A method for time shift according to a preferred embodiment of the present invention applicable to the television receiver including the PVR will now be described with reference to the flow chart of Fig. 2.

In operation 200, the central control unit 100 checks whether a user commands execution of a time-shift function through the user interface 106. In operation 204, when the user commands the execution of the time-shift function, the central control unit 100 receives a broadcasting signal through the DTV tuner 106 or the analog TV tuner 112. Then, in operation 206, the central control unit 100 checks whether the received broadcasting signal is a digital signal. In operations 208, when the received broadcasting signal is not a digital signal but an analog signal. Then, in operation 210, the central control unit 100 decodes a broadcasting stream according to the broadcasting signal, buffering the broadcasting stream to the buffer in order to store the broadcasting stream to the time shift storage region by the time shifting function.

When the received broadcasting signal is a digital signal, in operation 210, the central control unit 100 decodes a digital broadcasting signal, and buffers a broadcasting stream according to the broadcasting signal to the buffer in order to store the broadcasting stream in the time shift storage region by the time shifting function.

Thereafter, in operation 212, the central control unit 100 checks whether an image stream is present in the decoded broadcasting signal. In operation 214, when the image stream does not exist in the decoded broadcasting signal, the central control unit 100 prevents storage of an unnecessary broadcasting stream by clearing the buffer for storing a broadcasting stream according to the time shifting operation. In the case of the analog broadcasting, the presence of an image stream in the received broadcasting signal is determined on the basis of a level of a signal being received in a tuner, an extent of an SNR (signal noise ratio), or the presence of a signal carrier. In the case of the digital broadcasting, the presence of the image stream in the received broadcasting signal may be determined on the basis of whether the broadcasting signal is synchronized in the tuner.

When the image steam is present in the decoded broadcasting signal, the central control unit 100 checks whether an image stream with the same PID is received for less than a predetermined time through the signal detector 128 and the timer 130.

In operation 220, when the image stream having the same PID is received for less than the predetermined time, the central control unit 100 clears the buffer for the time-shifting operation so as to prevent storage of the broadcasting stream in the time shift storage region through the buffer.

In operation 222, when the image stream having the same PID is received for longer than the predetermined time, the central control unit 100 buffers a real-time broadcasting stream by the time shifting function, storing the real-time broadcasting stream in the time shift storage region of the stream storage unit 120.

An embodiment of the present invention includes a computer readable medium including a program command for performing an operation performed by various computers. The computer readable medium may include a program command, a data file, and a data structure individually or in combination thereof. The program command of the medium may be specially designed for the present invention, or may be well-known to those skilled in the computer software.

As mentioned above, according to the present invention, when the broadcasting stream is not buffered for longer than a predetermined time during the time-shifting operation, the buffer is cleared to prevent storage of the corresponding broadcasting stream. Accordingly, various user demands may be satisfied, and the time shift storage region can be efficiently managed.

It will be apparent to those skilled in the art that various modifications and variations can be made in the present invention. Thus, it is intended that the present invention covers the modifications and variations of this invention provided they come within the scope of the appended claims and their equivalents.

## Claims

1. A method for time shift, the method comprising:
buffering a received broadcasting stream to a buffer;
counting a time for which a broadcasting stream having the same identification information is received; and
clearing the buffer when the counted time is less than a predetermined time.

2. The method according to claim 1, further comprising storing the buffered broadcasting stream in a time shift storage region when the counted time is greater than the predetermined time.

3. The method according to claim 1, further comprising:
checking whether an image stream is present in the broadcasting stream; and
clearing the buffer when no image stream is present.

4. The method according to claim 1, wherein the counting of the time comprises:
extracting package identification information from the received broadcasting stream; and
checking whether the extracted packet identification information is changed.

5. A method for time shift, the method comprising:
buffering a received broadcasting stream to a buffer;
checking whether an image stream is present in the received broadcasting stream; and
clearing the buffer when no image stream is present.

6. The method according to claim 5, further comprising storing the buffered broadcasting stream in a time shift storage region when the image stream is present in the received broadcasting stream.

7. The method according to claim 5, further comprising:
counting a time for which a broadcasting signal having the same identification information is received; and
clearing the buffer when the counted time is less than a predetermined time.

8. The method according to claim 7, further comprising storing the buffered broadcasting stream in a time shift storage region when the counted time is greater than the predetermined time.

9. A television receiver comprising:
a buffer receiving a broadcasting stream and buffering the received broadcasting stream;
a storage unit storing the buffered broadcasting stream;
a signal detector extracting package identification information of the broadcasting stream;
a timer receiving the extracted identification information and counting a time for which the same package identification information is received; and
a control unit clearing the buffer when the counted time of the timer is less than a predetermined time.

10. The television receiver according to claim 9, wherein the control unit stores the buffered broadcasting stream in the storage unit when the counted time is greater than the predetermined time.

11. The television receiver according to claim 9, wherein the control unit checks whether an image stream is present in the received broadcasting stream, and clears the buffer when no image stream is present.
